# EUROPEAN PATENT APPLICATION

(11) **EP 4 332 359 A1**
(43) Date of publication of application: **06.03.2024**
(21) Application number: 23191057.1
(22) Date of filing: 11.08.2023
(51) Int. Cl.: F02B 37/12

(54) **PUMP LIMIT DISTANCE DETECTION FOR A TURBOCHARGER**

(30) Priority: 31.08.2022 GB 202212655
(71) Applicant: Caterpillar Energy Solutions GmbH, 68167 Mannheim (DE)
(72) Inventor: BERGER, Olaf, 68167 Mannheim (DE)
(74) Representative: Nordmeyer, Philipp Werner

(57) **Abstract**

The present invention pertains to a method for detecting a pump limit distance for a compressor pump of a turbocharger, a corresponding compressor system for a turbocharger of a combustion engine, and a combustion engine comprising such compressor system, in particular to reduce the occurrence of reverse flow and ensure safe operation of an engine. Accordingly, a method for monitoring a surge limit (12) of a turbocharger of a combustion engine during operation is suggested, comprising the steps of: receiving a respective measurement signal from at least two temperature sensors (28, 30, 32) arranged upstream of a compressor wheel (16) in an intake channel of the turbocharger conveying a medium, wherein the temperature sensors (28, 30, 32) are spaced apart from each other in a longitudinal direction relative to the compressor wheel (16); determining a temperature difference between at least two temperature sensors (28, 30, 32) based on said received measurement signals; comparing the determined temperature difference with a predefined threshold indicative of a surge limit (12) of the turbocharger; and outputting a signal based on said comparison.

## Description

### Technical Field

The present invention pertains to a method for detecting a pump limit distance for a compressor pump of a turbocharger, a corresponding compressor system for a turbocharger of a combustion engine, and a combustion engine comprising such compressor system, in particular to reduce the occurrence of reverse flow and ensure safe operation of an engine.

### Technological Background

Typically, supercharged diesel and gas engines utilize an exhaust gas turbocharger that enable compression of an intake gas and provide a large compressor pressure ratio. While this provides an improved power production of the engine this generally results in small and steep compressor operating maps having a smaller range of the operable delivery volume flow at a particular pressure ratio. Accordingly, operating ranges such as an intake temperature and/or density of an inflowing medium in which the engine is operating safely may also become smaller.

During operation of the engine, the operating conditions and/or a mode of operation may lead to an operating point in a compressor operating map corresponding to a surge limit, which represents the minimum required delivery volume flow at a corresponding maximum pressure ratio. When such surge limit is reached, reverse flows and undesired stalling at the compressor may occur. Hence, safe engine operation is problematic at and on the surge limit and not possible beyond that limit.

To avoid operation at or beyond the surge limit, additional equipment such as a compressor bypass and/or an exhaust gas waste gate are often integrated into the engine design to improve the operating ranges. Furthermore, to determine whether a surge limit has been reached, current methods require the measurement of several operating parameters, the calculation of a pressure ratio and a normalized volume flow and a comparison with an operating map according to the characteristics provided by the manufacturer.

These methods, however, have the disadvantage that an extensive measurement and calculation effort is required during the actual engine operation and that operating maps of the current engine model need to be known and are present in a corresponding data set. Furthermore, such data and calculations do not take into account any tolerances of operating maps with regard to their dependency on a degree of contamination of the compressor wheel, the diffusor, and/or other relevant turbocharger components.

Accordingly, there is a need to detect an approaching of a surge limit of a turbocharger in a less extensive manner and which may be implemented for a variety of operating conditions.

### Summary of the Invention

Starting from the prior art, it is an objective to provide a new and inventive method for monitoring a surge limit of a turbocharger of a combustion engine during operation. In particular, it may be an objective to provide a monitoring that may be easily implemented and requires fewer measurements and/or calculations and which preferably provides a reliable monitoring independent of specified engine and/or turbocharger characteristics.

This objective is solved by means of the method for monitoring a surge limit of a turbocharger of a combustion engine during operation with the features of claim 1. Preferred embodiments are set forth in the present specification, the Figures as well as the dependent claims.

Accordingly, a method for monitoring a surge limit of a turbocharger of a combustion engine during operation is suggested, comprising the steps of:
receiving a respective measurement signal from at least two temperature sensors arranged upstream of a compressor wheel in an intake channel of the turbocharger conveying a medium, wherein the temperature sensors are spaced apart from each other in a longitudinal direction relative to the compressor;
determining a temperature difference between at least two temperature sensors based on said received measurement signals;
comparing the determined temperature difference with a predefined threshold indicative of a surge limit of the turbocharger; and
outputting a signal based on said comparison.

Furthermore, a compressor system for a turbocharger of a combustion engine is suggested, comprising a compressor comprising an intake channel and an outlet channel for a medium, at least two temperature sensors arranged upstream of a compressor wheel of the compressor in the intake channel and being spaced apart from each other in a longitudinal direction relative to the compressor wheel, and a control unit configured to monitor a surge limit of the turbocharger during operation, wherein the control unit is configured to receive a respective measurement signal from the at least two temperature sensors, to determine a temperature difference between at least two temperature sensors based on said received measurement signals, to compare the determined temperature difference with a predefined threshold indicative of a surge limit of the turbocharger, and to output a signal based on said comparison.

Furthermore a combustion engine is suggested, comprising the compressor system according to the invention.

### Brief Description of the Drawings

The present disclosure will be more readily appreciated by reference to the following detailed description when being considered in connection with the accompanying drawings in which:
Fig. 1 shows a schematic depiction of an operating map for different power efficiencies of a turbocharger of a combustion engine;
Fig. 2 shows a schematic depiction of a compressor system of a turbocharger and a corresponding medium being compressed in a longitudinal section; and
Fig. 3 shows an exemplary temperature sensor arrangement in the compressor system according to Figure 2 for monitoring a distance to a surge limit of the turbocharger.

### Detailed Description of Preferred Embodiments

In the following, the invention will be explained in more detail with reference to the accompanying figures. In the Figures, like elements are denoted by identical reference numerals and repeated description thereof may be omitted in order to avoid redundancies.

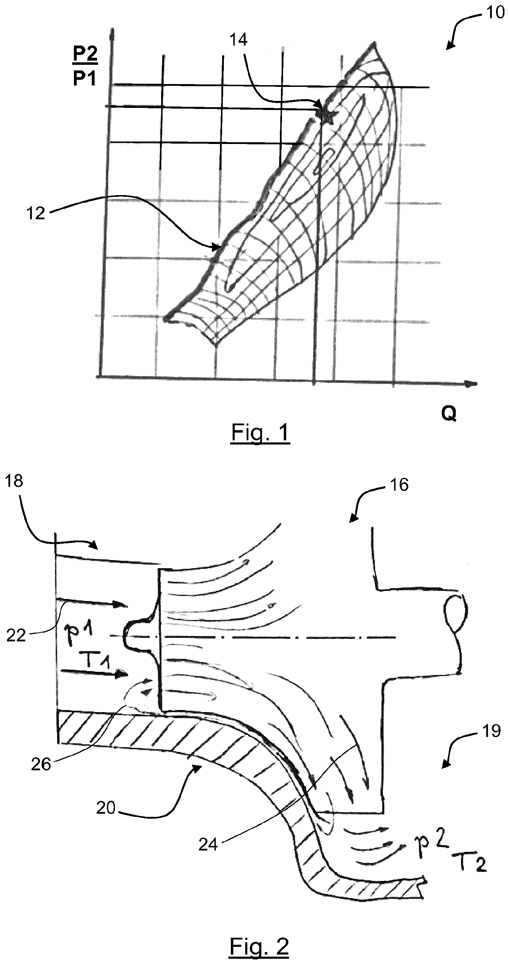

In Figure 1 an operating map 10 for a turbocharger of a combustion engine is schematically shown, wherein the pressure ratio P1/P2 is shown over the volumetric flow Q. The pressure ratio is a ratio between the pressure of a medium, e.g. air or an air-gas mixture, measured downstream of a compression wheel and the pressure of said medium upstream of said compression wheel, such that the pressure ratio is a direct measure for the compression level of said medium.

As shown, the operating map 10 provides different power efficiencies and corresponding characteristic curves or lines. In other words, the operating map 10 is defined by corresponding characteristic lines, wherein the operating map 10 defines the respective acceptable or required volumetric flows at a corresponding pressure ratio or compression level provided by the compressor of the turbocharger.

In accordance, as also shown in Figure 1, a surge limit 12 defines the minimum volumetric flow required for a particular pressure ratio. At said surge limit 12 operation of the turbocharger and engine is difficult to maintain and such operation is no longer possible, if said minimum volumetric flow is no longer met. Typically, operation at the surge limit 12 is hence to be avoided in order to ensure safe operation of the engine.

As indicated by the star symbol, an operating point 14 within said operating map 10 is close to the surge limit 12 and may gradually approach said surge limit 12, e.g. if the pressure ratio is increased and/or the volumetric flow is further reduced. If the operating point 14 shifts towards the surge limit 12, stalling of the volumetric flow and functionality of the turbocharger may occur, resulting in a loss of operation of the engine.

During normal operation, such stalling typically does not occur. However, at increasing temperatures and pressure ratios, a level of backflow of the compressed medium may occur, as depicted in the schematic longitudinal section according to Figure 2. Accordingly, a portion of a compressor wheel 16 of a compressor system is shown within a housing 20 defining an intake channel 18 and an outlet channel 19, wherein a medium, e.g. air or an air-gas mixture is forwarded from an upstream end of the compressor wheel 16 to a downstream end of the compressor wheel 16, such that the medium is converted from an essentially uncompressed state 22 to a compressed state 24, as also indicated by the corresponding pressures and temperatures. As a result of said compression, the pressure P2 is hence larger than the pressure P1 and the compression has caused a corresponding increase in temperature for the compressed medium 24, such that the temperature T2 is higher than the temperature T1.

Due to the higher pressure and temperature, a minimal level of backflow 26 may result, causing a portion of the compressed medium 24 to be returned to the upstream portion or intake channel 18 via a geometric clearance between the housing 20 or wall thereof and the compressor wheel 16 accommodated by the housing 20. While such backflow 26 may be unproblematic at lower pressure ratios, an increase in the amount of backflow 26 may lead to volumetric flow perturbations and inconsistent operation. The backflow 26 may be particularly increased, when a distance to a surge limit 12 is reduced during operation of the turbocharger and engine.

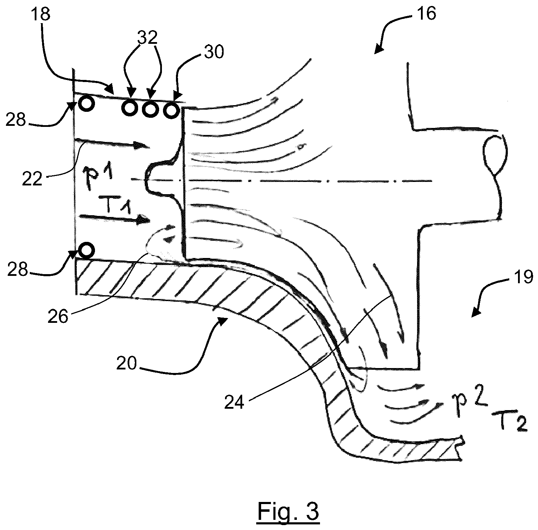

To hence monitor said distance to the surge limit 12 and detect such occurrence at an early stage, temperature sensors 28, 30, 32 may be provided in the intake channel 18, as depicted in Figure 3. In the present and nonlimiting example a total of five sensors have been implemented, wherein two sensors have been arranged and configured as reference sensors 28, which have been arranged at a respective distance to the upstream end of the compressor wheel 16 so as to measure the temperature of the medium in an uncompressed state 22.

The reference sensors 28 have hence been positioned at a position furthest away from the compressor wheel 16, as seen in the longitudinal direction along the intake channel 18. The position may be chosen such that even in the occurrence of a backflow 26, no backflow 26 may be detected at the reference sensors 28 under acceptable engine operation, i.e. including the surge limit 12 and the highest possible pressure ratios and/or operating temperatures.

The reference sensors 28 have furthermore been arranged at essentially the same longitudinal distance towards the upstream end of the compressor wheel 16, yet are spaced apart along the circumference of the intake channel 18. Thereby, a level of redundancy may be provided and thermal and/or geometric characteristics of the compressor system or turbocharger as a whole may be taken into account. In other words, measurement fluctuations, flow and/or heat distribution inhomogeneities may be accounted for by providing the redundancy of the reference sensor 28.

In the intake channel 18, three further temperature sensors 30, 32 have been arranged along the inner wall. One of said sensors 30 has been arranged closest to the compressor wheel 16 and has been arranged so as to detect the earliest occurrence of a backflow 26. The two other temperature sensors are intermediate sensors 32, arranged between the closest sensor 30 and the reference sensor 28 being positioned furthest away from the compressor wheel 16.

During operation of the compressor system and the turbocharger, the measurements obtained by the temperature sensors 28, 30, 32 enable the determining of a temperature difference, wherein a temperature difference is based on a comparison between the measurement obtained by the respective intermediate sensors 32 and the reference sensor 28 as well as between the closest sensor 30 and the reference sensor 28.

When a backflow 26 is present, the closest sensor 30 will be the first sensor measuring an increase in temperature due to the increased temperature of the compressed medium 24 in the backflow 26 compared with the lower temperature of the uncompressed medium 22 measured at the reference sensor 28. Accordingly a temperature difference will be determined. If said backflow is increased, a temperature measured by the intermediate sensors 32 will be successively increased towards the upstream end, such that a corresponding temperature difference will be determined.

The intermediate sensors 32 are preferably arranged at a predefined longitudinal spacing between each other and with regard to the closest sensor 30 and reference sensor 28. Accordingly, a temperature difference determined for a particular intermediate sensor 32 may provide a direct indication of the extension of the backflow 26 in the upstream direction.

Thereby, a reliable monitoring of the approaching of a surge limit 12 may be provided, since the extension of the backflow 26 typically correlates with an achieved or current pressure ratio within an operating map. In other words, if the surge limit 12 is approached and a distance of an operating point 14 to said surge limit 12 is reduced due to an increased pressure ratio and/or a reduced volumetric flow, an increase in backflow 26 and extension thereof in the upstream direction may be expected.

To further improve the reliability of such monitoring, a predefined temperature difference threshold may be provided. Should a comparison of a determined temperature difference of a respective sensor 30, 32 relative to the reference sensor 28 exceed said predefined threshold, a signal may be output, indicating that a surge limit 12 is being approached and a corresponding control measure needs to be taken in order to maintain or ensure safe operation of the engine.

Such signal may e.g. be dependent on the extension of the backflow 26, such that the exceeding of said threshold for the closest sensor 30 may not result directly in the outputting of such signal, but e.g. an exceeding of said threshold for an intermediate sensor 32 being closest to the reference sensor 28 may cause said signal to be output.

The predefined threshold in this regard may also vary for the respective sensors 30, 32, depending e.g. on the expected temperature increase. The predefined threshold may e.g. function as a sign-off, wherein a temperature difference is to be determined for the closest sensor 30 and successively for the intermediate sensors 32 before outputting a signal.

Furthermore, the predefined threshold may also include an absolute threshold, e.g. in addition or alternatively, such that a sudden large increase e.g. of the closest sensor 30 may also result in the outputting of the signal. For example, such signal may indicate an occurrence of a rapid change in the operating conditions resulting in a corresponding large increase in the backflow 26.

The reference sensors 28 may furthermore optionally define the predefined threshold. For example, the reference sensor 28 may provide a temperature of the uncompressed medium 22, wherein a lower temperature may e.g. correspond to a larger threshold value compared with a higher temperature of the uncompressed medium 22 or vice versa. Thereby, different operating conditions may be taken into account, e.g. varying ambient temperatures of air being used and/or varying operating temperatures of a gaseous mixture. Accordingly, a monitoring of a distance to the surge limit 12 may be ensured even in case of different implementations and/or operating conditions without requiring additional input other than the temperature measurements.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

This is in particular the case with respect to the following optional features which may be combined with some or all embodiments, items and/or features mentioned before in any technically feasible combination.

A method for monitoring a surge limit of a turbocharger of a combustion engine during operation is provided.

Such method comprises the steps of:
receiving a respective measurement signal from at least two temperature sensors arranged upstream of a compressor wheel in an intake channel of the turbocharger conveying a medium, wherein the temperature sensors are spaced apart from each other in a longitudinal direction relative to the compressor;
determining a temperature difference between at least two temperature sensors based on said received measurement signals;
comparing the determined temperature difference with a predefined threshold indicative of a surge limit of the turbocharger; and
outputting a signal based on said comparison.

Between the outer contour of a compressor wheel and a compressor housing typically a geometric clearance exists, which may allow a small backflow of the medium, e.g. air or another gaseous mixture being compressed, towards the intake of a compressor system. Such backflow may occur during normal operation of the engine and turbocharger and hence results in a portion of the medium that has already been compressed being forwarded back towards an upstream end, wherein the medium is expected to be in an essentially uncompressed state.

Due to the temperature difference of the medium between the uncompressed state and the compressed state, the reverse flow of the portion of the compressed medium may result in an increase in temperature at the upstream end of the compressor wheel.

The suggested method uses such resulting temperature difference between the corresponding positions as a reliable estimate for the amount of occurring backflow, since a larger temperature difference is to be expected, if a corresponding larger portion of the compressed medium downstream of the compressor wheel is forwarded in the upstream direction beyond the compressor wheel. During normal operation, the typically occurring amount of backflow is considered to be minimal or acceptable.

However, when a surge limit is approached, e.g. a predefined distance towards said surge limit is reached or exceeded, the amount of backflow may result in a temperature increase to such extent that the difference in temperature exceeds the predefined threshold indicative of a surge limit of the turbocharger. Accordingly, a signal may be timely output to indicate e.g. that safe operation of the turbocharger may be at risk, before said surge limit has been reached.

In this regard the method hence utilizes the effect that with increasing pressures or pressure ratios the amount of the medium, which flows back through compressor clearances upstream towards the intake channel, is increasing. Since the temperature of the medium has been increased due to the compression, the increase in backflow may be determined based on the corresponding increase in temperature, e.g. compared with the temperature of the medium in the uncompressed state.

The method thus provides that the approaching of a pumping or surge limit may be monitored and detected at an early stage, wherein said detection is based on the temperature difference and hence does not require an extensive measurement and calculation effort. Moreover, the monitoring and detection may be provided independent of the respective turbocharger and/or engine characteristics, i.e. operating maps, operating states, operating life, and/operating parameters of the engine and/or turbocharger are not required. Thereby, the method may be easily implemented for a variety of turbocharger and/or engine types and is essentially independent of a level of contamination of e.g. the compressor wheel or housing.

As an output signal, a warning signal and/or a control signal may be output. For example, in case of a stationary gas engine, the method may provide that a critical operating range is left again through suitable measures such as a parameter adjustment, a wastegate or a compressor bypass control so as to protect the engine and ensure continued operation. The determining of a difference and the comparison with the threshold in this regard is particularly advantageous, since the approach of the surge limit is typically a relatively slow and/or gradual process, rendering it generally difficult to enable a safe detection of the distance to the surge limit. The determining of the temperature difference and comparison with said threshold, however, ensures that a corresponding signal is output, when said threshold is exceeded while still enabling normal operation in relatively large operating range.

Preferably, the outputting of the signal is based only on said comparison. In other words, the method does not require additional parameters or actual flow measurements to be received. This may reduce computational effort and complexity by requiring only the respective temperature measurements and may hence facilitate the implementation of the method and the independency.

In order to facilitate that a temperature difference results from an increasing amount of backflow of the medium being in the compressed state, at least one of the sensors may be configured as a reference sensor arranged at a predefined longitudinal distance from the compressor wheel to detect an intake temperature of the medium in an uncompressed state, wherein at least one of the sensors is arranged between said reference sensor and the compressor wheel. Preferably, the at least one sensor arranged between said reference sensor and the compressor wheel is arranged at a longitudinal distance less than 20 cm from the compressor wheel, in particular less than 5 cm from the compressor wheel.

By providing the reference sensor, a difference in temperature being calculated it may be avoided that an increase in temperature difference is based on an increased temperature measured at the reference sensor due to a backflow of the medium in the compressed state reaching said sensor. While the calculated difference may be essentially independent of the absolute temperature of the reference sensor and hence the temperature of the medium in the uncompressed state, the absolute temperature measured at the reference sensor may optionally be taken into account e.g. to evaluate and/or take into account any fluctuations in the temperature of the intake medium.

In this regard, the predefined threshold may be based on a temperature measurement from at least one sensor being arranged at a position being furthest away from the compressor wheel in the longitudinal direction. For example, said sensor may not be configured as a reference sensor, i.e. does not necessarily measure a temperature in an uncompressed state. The sensor being furthest away may e.g. be arranged such that a predefined temperature increase may be measured compared with a reference sensor, which is due to an amount of backflow of the compressed medium upon normal operation and which is considered acceptable. Said sensor may hence provide steady state measurements, which are not expected to be significantly influenced or affected, if the amount of backflow is suddenly increased.

By providing the predefined threshold based on said sensor being furthest away from the compressor wheel, normal operating temperatures may be used. For example, in case of relatively low temperatures being measured at said sensor, the acceptable difference may be larger, since the increase in temperature due to backflow and at a temperature sensor being arranged closer to the compressor wheel may e.g. be more significant. At generally higher operating temperatures, the acceptable difference may be lower, e.g. since a corresponding operating map may be smaller and a surge limit may more easily be approached. The predefined threshold may be accordingly adapted based on the temperature measured at the sensor being furthest away from the compressor wheel so as to provide a reliable output adapted under different operating conditions.

The sensor being furthest away from the compressor wheel may also function as a reference sensor, such that the predefined threshold is essentially based on the temperature of the medium being in an uncompressed state.

Preferably, the predefined threshold is a predefined percentage of the temperature measurement from the at least one sensor being arranged a position being furthest away from the compressor wheel in the longitudinal direction. In particular, said percentage may be between 1 percent and 25 percent, preferably between 5 percent and 20 percent.

For example, if air is used as a medium, the temperature sensor may measure the air in an uncompressed state and being fed into the intake at ambient temperature, e.g. at 25°C. In such example, the predefined threshold may e.g. be 1°C and 5°, whereas at lower temperatures said threshold may be lower. Having a predefined percentage may have the advantage that the monitoring of the approaching of a surge limit may be essentially equally performed under varying operating conditions, such that the implementation of the method may be facilitated. However, as described above, it may also be provided that the predefined threshold be based on the absolute temperature of the sensor being furthest away, wherein said percentage may be variable for a corresponding range temperature range.

A respective measurement signal may also be received from at least two temperature sensors arranged between the at least one reference sensor and the compressor wheel and arranged at different longitudinal distances from the compressor wheel, wherein the comparison includes determining a temperature difference from measurement signals of adjacent sensors and/or a temperature difference from a measurement signal of a sensor between the reference sensor and the compressor wheel and a measurement signal of the reference sensor.

In other words, a temperature difference may be determined between every sensor and the reference sensor, e.g. to determine a respective influence of a backflow of a portion of the compressed medium. For example, one temperature sensor may be arranged in direct proximity or be directly adj acent to the compressor wheel while another, intermediate, temperature sensor may be arranged between said temperature sensor and the reference sensor. In case a temperature difference is determined both for the intermediate and the proximate sensor, an indication is provided that a portion of the compressed medium backflowing towards the upstream end may be increased, since a corresponding effect is measured at the intermediate temperature sensor.

Accordingly, a signal may be preferably output, if the determined temperature difference between the intermediate sensor and the reference sensor exceeds the predefined threshold. Such predefined threshold may furthermore be specific for the respective sensors, such that e.g. a lower threshold may be provided for the intermediate threshold, whereas a higher threshold may be provided for the sensor being in direct proximity to the compressor wheel, e.g. to accommodate for varying operating conditions.

By the same token, temperature differences between adjacent temperature sensors may form a basis for outputting the signal. While according to the above example the intermediate sensor may be adjacent to the reference sensor, it may also be provided that a temperature difference is determined between the intermediate sensor and the sensor being in direct proximity of the compressor, if said sensors are adjacent to each other. The consideration of any such temperature difference may provide an indication of the longitudinal extension of an occurring backflow towards the upstream end of the intake.

By means of the temperature difference and the extension of the backflow, a more precise distance to a pumping limit or surge limit may be determined. This may be particularly advantageous, if more than two sensors are present between the reference sensor and the compressor wheel, in particular three or four sensors. Thereby, a successive and/or gradual temperature difference and corresponding extension of the backflow may be determined, which corresponds to an overall amount of backflow of the compressed medium as a reliable indicator of a distance to a surge limit being approached.

It may also be provided that at least two of the sensors are spaced apart along a circumference of the intake channel. Such circumferential spacing provides a level of redundancy for the same longitudinal extension within the intake channel and hence increases the reliability of the determined temperature difference.

Furthermore, it may be provided that a given geometry of e.g. the intake channel may not provide a rotational symmetry, such that a measurement at the same longitudinal extension, yet at a different position along the circumference may be advantageous to take such different geometries and/or corresponding flow characteristics into account. By the same token, it may be provided that the intake channel or housing of the compressor does not comprise a homologous temperature distribution, e.g. due to different components surrounding the intake channel exhibiting a different active or passive heat transmission or diffusion.

At least one of the sensors may be arranged at a predefined radial distance from the inner wall surface of the intake channel. Preferably, said radial distance is less than 10 mm, in particular less than 5 mm. Alternatively, or in addition, said radial distance may be less than half of the smallest radial extension of the compressor wheel. Such arrangement of the sensors may ensure that an effect of a backflow of the compressed medium may be detected while the intake volume flow is not or at least not significantly affected.

A distance, e.g. minimal distance, to the inner wall may also provide that any temperature fluctuations of the housing do not readily affect the measurement of the medium being present in the intake of the compressor.

In order to detect a gradual effect of the backflow of the compressed medium, to consider any present inhomogeneous temperature distributions, and/or provide a further temperature reference for the predefined threshold, at least one of the sensors may be arranged directly at the inner wall surface of the intake channel or at the inner wall surface of a wall surrounding the compressor wheel.

Preferably, at least one of the sensors is arranged at the inner wall surface of a wall surrounding the compressor wheel at a position being equidistant to the upstream end and the downstream end of the compressor wheel. In other words, a housing or wall portion surrounding the compressor wheel and providing a level of clearance may be equipped with one or more temperature sensors, wherein the respective temperature sensor is arranged directly at the surface or in a cavity thereof, such that a direct contact and thermal coupling is provided. For example, the position may be chosen such that a distance towards opposing longitudinal ends is essentially the same, said distance preferably being in the longitudinal direction.

As described above, the value of the predefined threshold may be present as a predefined percentage of the temperature measured at a reference sensor and/or sensor arranged furthest away from the compressor wheel in the longitudinal direction. The predefined threshold may also be provided as a value within an absolute threshold range, wherein the predefined threshold is preferably between 1°C and 20°C, preferably between 3°C and 15°C or about 5°C. The predefined threshold may be dependent on the type of medium and the level of safety required to avoid operation at the surge limit, e.g. under different operating conditions. Higher ranges, e.g. between 10°C and 20°C may be particularly chosen for higher temperatures of the medium in the uncompressed state, which may be determined e.g. at a reference sensor. Such higher temperatures may be present e.g. in the case of an exhaust gas or gaseous mixture as a medium for the compressor.

The predefined threshold may also be based on a received operating mode and/or actual efficiency of the turbocharger or combustion engine. Although the measurement of the temperatures and the determining of the temperature difference on themselves do not require such further operating parameters, such parameters may be input, e.g. during or prior to operation, to set the desired and/or required threshold level to ensure safe operation of the turbocharger and engine performance.

The predefined threshold may also be based on a temperature measurement from at least one sensor being arranged at a position being closest to the compressor wheel in the longitudinal direction. Such temperature measurement may e.g. provide that a minimal or acceptable backflow occurring during normal operation may be taken into account as a further reference value for determining the threshold to be exceeded as a temperature difference.

For example, this may factor in the temperature or estimate of the temperature of the medium in the compressed state while the actual compression or pressure ratio is not required as a parameter to output the signal.

Such temperature measurement is preferably compared with a temperature measurement of a reference sensor providing measurements of the medium in an uncompressed state. Accordingly, a base level may be determined, e.g. for an expected backflow and under preferred operating conditions, which may be used to select, preferably automatically, a predefined threshold value.

By the same token, such measurement may increase the reliability under different operating conditions and/or for implementation with different compressors and/or turbochargers. For example, a high temperature measurement may indicate a large pressure ratio and/or the use of a high intake temperature of the medium, such that the corresponding threshold may be set smaller to accommodate for a corresponding smaller operating map.

Hence, the predefined threshold may be advantageously adapted to the operating conditions and/or the characteristics of the turbocharger by means of the one or more temperature measurements and without requiring said parameters as a particular input.

Furthermore, a compressor system for a turbocharger of a combustion engine is suggested, comprising a compressor comprising an intake channel and an outlet channel for a medium, at least two temperature sensors arranged upstream of a compressor wheel of the compressor in the intake channel and being spaced apart from each other in a longitudinal direction relative to the compressor wheel, and a control unit configured to monitor a surge limit of the turbocharger during operation, wherein the control unit is configured to receive a respective measurement signal from the at least two temperature sensors, to determine a temperature difference between at least two temperature sensors based on said received measurement signals, to compare the determined temperature difference with a predefined threshold indicative of a surge limit of the turbocharger, and to output a signal based on said comparison.

Preferably, said compressor system is configured to perform the monitoring method as described in the above, wherein the two or more sensors may be accordingly arranged and/or configured.

Furthermore, a combustion engine is suggested, preferably a gas engine, comprising the compressor system as described in the above.

### Industrial Applicability

With reference to the Figures, a method for monitoring a surge limit of a turbocharger of a combustion engine as well as a corresponding compressor system and combustion engine equipped with such compressor system are suggested. The suggested method and compressor system as mentioned above are applicable in a variety of engines, such as gas engines, wherein the risk of approaching a surge limit of a turbocharger is present. The monitoring is particularly advantageous, since it may be performed under a variety of operating conditions and is generally independent of the particular engine and/or turbocharger characteristics. The method may be implemented by means of a corresponding configuration of a control unit and by a temperature sensor arrangement, which may e.g. be mounted in the intake of a compressor system of a turbocharger. The disclosed compressor system or required parts and/or configurations thereof may be mounted into existing turbochargers or may replace current turbochargers as a replacement or retrofit part, which may be exchanged e.g. upon or prior to overhaul or prior to use.

## Claims

1. A method for monitoring a surge limit (12) of a turbocharger of a combustion engine during operation, comprising the steps of:
receiving a respective measurement signal from at least two temperature sensors (28, 30, 32) arranged upstream of a compressor wheel (16) in an intake channel (18) of the turbocharger conveying a medium, wherein the temperature sensors (28, 30, 32) are spaced apart from each other in a longitudinal direction relative to the compressor wheel (16);
determining a temperature difference between at least two temperature sensors (28, 30, 32) based on said received measurement signals;
comparing the determined temperature difference with a predefined threshold indicative of a surge limit (12) of the turbocharger; and
outputting a signal based on said comparison.

2. The method according to claim 1, wherein the outputting of the signal is based only on said comparison.

3. The method according to claim 1 or 2, wherein at least one of the sensors (28, 30, 32) is configured as a reference sensor (28) arranged at a predefined longitudinal distance from the compressor wheel (16) to detect an intake temperature of the medium in an uncompressed state and wherein at least one of the sensors (30, 32) is arranged between said reference sensor (28) and the compressor wheel (16), preferably at a longitudinal distance less than 20 cm from the compressor wheel (16), in particular less than 5 cm from the compressor wheel (16).

4. The method according to claim 3, wherein a respective measurement signal is received from at least two temperature sensors (30, 32) arranged between the at least one reference sensor (28) and the compressor wheel (16) and arranged at different longitudinal distances from the compressor wheel (16), wherein the comparison includes determining a temperature difference from measurement signals of adjacent sensors (28, 30, 32) and/or a temperature difference from a measurement signal of a sensor (30, 32) between the reference sensor (28) and the compressor wheel (16) and a measurement signal of the reference sensor (28).

5. The method according to any of the preceding claims, wherein at least two of the sensors (28, 30, 32) are spaced apart along a circumference of the intake channel (18).

6. The method according to any of the preceding claims, wherein at least one of the sensors (28, 30, 32) is arranged at a predefined radial distance from the inner wall surface of the intake channel (18), said radial distance preferably being less than 10 mm, in particular less than 5 mm, and/or wherein said radial distance is preferably less than half of the smallest radial extension of the compressor wheel (16).

7. The method according to any of the preceding claims, wherein at least one of the sensors is arranged directly at the inner wall surface of the intake channel (18) or at the inner wall surface of a wall surrounding the compressor wheel (16).

8. The method according to claim 7, wherein at least one of the sensors is arranged at the inner wall surface of a wall surrounding the compressor wheel (16) at a position being equidistant to the upstream end and the downstream end of the compressor wheel (16).

9. The method according to any of the preceding claims, wherein the predefined threshold is between 1°C and 20°C, preferably between 3°C and 15°C or about 5°C.

10. The method according to any of the preceding claims, wherein the predefined threshold is based on a temperature measurement from at least one sensor (28) being arranged at a position being furthest away from the compressor wheel (16) in the longitudinal direction.

11. The method according to claim 10, wherein the predefined threshold is a predefined percentage of the temperature measurement from the at least one sensor (28) being arranged a position being furthest away from the compressor wheel (16) in the longitudinal direction, said percentage being between 1 percent and 25 percent, preferably between 5 percent and 20 percent.

12. The method according to any of the preceding claims, wherein the predefined threshold is based on a received operating mode and/or actual efficiency of the turbocharger or combustion engine.

13. The method according to any of the preceding claims, wherein the predefined threshold is based on a temperature measurement from at least one sensor being arranged at a position being closest (30) to the compressor wheel (16) in the longitudinal direction.

14. A compressor system for a turbocharger of a combustion engine, comprising
a compressor comprising an intake channel (18) and an outlet channel (19) for a medium,
at least two temperature sensors (28, 30, 32) arranged upstream of a compressor wheel (16) of the compressor in the intake channel (18) and being spaced apart from each other in a longitudinal direction relative to the compressor wheel (16), and
a control unit configured to monitor a surge limit (12) of the turbocharger during operation, wherein the control unit is configured to receive a respective measurement signal from the at least two temperature sensors (28, 30, 32), to determine a temperature difference between at least two temperature sensors (28, 30, 32) based on said received measurement signals, to compare the determined temperature difference with a predefined threshold indicative of a surge limit (12) of the turbocharger, and to output a signal based on said comparison.

15. A combustion engine, comprising the compressor system according to claim 14.
